# FASCICULE DE BREVET EUROPEEN

(11) **EP 2 137 051 B1**
(45) Date de publication et mention de la délivrance du brevet: **18.08.2010**
(21) Numéro de dépôt: 08788116.5
(22) Date de dépôt: 03.04.2008
(51) Int. Cl.: B62D 25/14

(54) **TRAVERSE DE PLANCHE DE BORD DE VÉHICULE AUTOMOBILE AVEC RÉGLAGE, ET VÉHICULE AUTOMOBILE CORRESPONDANT**
VERSTELLBARER QUERTRÄGER FÜR EIN AUTOARMATURENBRETT UND ENTSPRECHENDES AUTO
ADJUSTABLE CROSSBAR FOR AUTOMOBILE DASHBOARD AND CORRESPONDING AUTOMOBILE

(30) Priorité: 13.04.2007 FR 0754473
(43) Date de publication de la demande: 30.12.2009
(73) Titulaire: Faurecia Interieur Industrie, 92000 Nanterre (FR)
(72) Inventeur: BAUDART, Laurent, F-60530 Fresnoy En Thelle (FR)
(74) Mandataire: Domenego, Bertrand
(86) Numéro de dépôt international: PCT/FR2008/050592
(87) Numéro de publication internationale: WO 2008/139092

(56) Documents cités:
- EP-A- 1 762 468
- EP-A- 1 816 055
- WO-A-2007/080297

## Description

La présente invention concerne une traverse de planche de bord de véhicule automobile, du type destinée à s'étendre axialement sensiblement suivant un axe transversal du véhicule automobile, et comprenant un premier tronçon axial et un deuxième tronçon axial distincts s'étendant dans le prolongement l'un de l'autre

Les traverses de planche de bord sont destinées à être disposées transversalement entre les montants latéraux avant des caisses des véhicules, généralement nommés « piliers A ». Des exemples de traverse de planche de bord sont connus des documents WO 2007/080297, EP 1816055 et EP 1762468.

Ces traverses de planche de bord sont destinées à rigidifier la caisse du véhicule automobile et à supporter des équipements de véhicule automobile, notamment une colonne de direction.

Il est possible de prévoir une traverse de planche de bord possédant deux tronçons axiaux distincts reliés à leurs extrémités adjacentes, afin d'optimiser la résistance de chaque tronçon pour obtenir une traverse de planche de bord légère et résistante. Néanmoins, ceci complique les opérations d'assemblage de la traverse de planche de bord, ainsi que son montage sur la caisse du véhicule automobile.

Un but de la présente invention est de proposer une traverse de planche de bord de véhicule automobile résistante et qui puisse être montée facilement sur la caisse d'un véhicule automobile.

A cet effet, l'invention propose une traverse de planche de bord de véhicule automobile, du type précité, caractérisée en ce que le premier tronçon et le deuxième tronçon possèdent des extrémités adjacentes destinées à être en appui plan l'une contre l'autre sensiblement suivant l'axe transversal, et en ce que la traverse comprend des moyens de fixation desdites extrémités adjacentes permettant un réglage de la position relative desdites extrémités adjacentes suivant au moins un axe de réglage sensiblement perpendiculaire à l'axe transversal.

Selon d'autres modes de réalisation, la traverse de planche de bord comprend une ou plusieurs des caractéristiques suivantes, prise(s) isolément ou selon toutes les combinaisons techniquement possibles :
- les moyens de fixation possèdent au moins une vis de fixation des extrémités adjacentes du premier tronçon et du deuxième tronçon entre elles, d'axe destiné à être sensiblement parallèle à l'axe transversal ;
- une des extrémités du premier tronçon et du deuxième tronçon possède des trous filetés de réception des vis, et l'autre extrémité possède des orifices de passage des vis ;
- les orifices sont dimensionnés pour permettre un réglage de la position relative des tronçons suivant un axe longitudinal du véhicule au moment du vissage ;
- les orifices sont dimensionnés pour permettre un réglage de la position relative des tronçons suivant un axe vertical du véhicule au moment du vissage ;
- les extrémités adjacentes possèdent des éléments emboîtables en appui plan suivant l'axe transversal avec un jeu suivant le ou chaque axe de réglage pour permettre le ou les réglages, les éléments emboîtables possédant des régions destinées à venir en appui en cas de rotation d'un des premiers et deuxième tronçons par rapport à l'autre, en cas de choc subi par le véhicule automobile, pour s'opposer à ladite rotation ;
- un des premier et deuxième tronçons possède un embout définissant un espace de réception d'une portion d'extrémité de l'autre tronçon avec un jeu suivant le ou chaque axe de réglage, la portion d'extrémité étant destinée à venir en appui sur une paroi intérieure de l'embout en cas de rotation relative des premier et deuxième tronçons ;
- un des premier et deuxième tronçons possède un flasque d'appui sur une surface d'appui de l'autre tronçon suivant l'axe transversal, le flasque possédant un retour de blocage en rotation destiné à présenter un jeu avec une surface de blocage de l'autre tronçon pour permettre le réglage suivant le ou chaque axe de réglage, et à venir en appui sur ladite surface de blocage de l'autre tronçon pour s'opposer à une rotation relative des premier et deuxième tronçons ;
- les extrémités axiales des dispositifs de fixation sur les piliers A d'une caisse de véhicule automobile, possédant des moyens de liaison aux piliers A permettant un réglage de la position de chacun des premier et deuxième tronçons par rapport au pilier A associé suivant l'axe transversal et/ou l'axe vertical du véhicule automobile ;
- un des premier et deuxième tronçons est réalisé à partir d'une pièce métallique moulée ou injectée ;
- l'autre parmi les premier et deuxième tronçons est réalisé à partir d'un tube métallique ;
- les premier et deuxième tronçons sont réalisés dans des métaux différents ; et
- un des premier et deuxième tronçons est réalisé en magnésium, en alliage de magnésium, en aluminium ou en alliage d'aluminium, et l'autre tronçon est réalisé en aluminium en alliage d'aluminium ou en acier.

L'invention concerne également un véhicule automobile possédant une caisse et une traverse de planche de bord tel que définie ci-dessus, disposée transversalement entre les piliers A de la caisse.

L'invention et ses avantages seront mieux compris à la lecture de la description qui va suivre, donnée uniquement à titre d'exemple, et faite en se référant aux dessins annexés, sur lesquels :
- la figure 1 est une vue schématique en perspective d'une traverse de planche de bord conforme à l'invention ;
- la figure 2 est une vue agrandie d'une zone de liaison de deux tronçons axiaux de la traverse de la figure 1, désignée par la flèche II, avant assemblage des deux tronçons axiaux de la traverse ; et
- les figures 3 et 4 sont des vues schématiques de dessus de la zone de liaison, respectivement en position normale de fonctionnement, et en cas de choc.

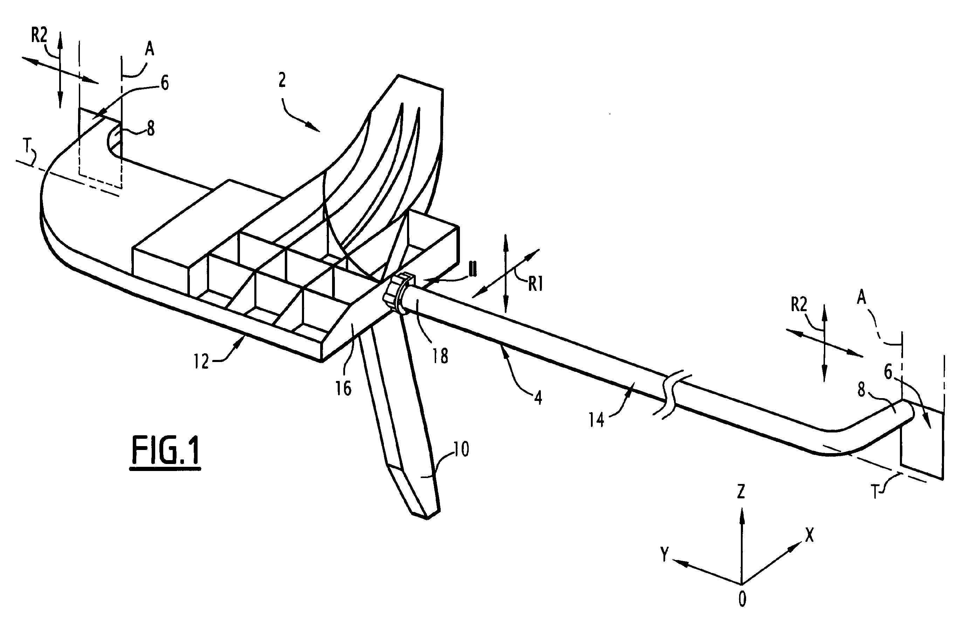

Dans la suite de la description, les termes « longitudinal », « transversal », « avant », « arrière », « droite », « gauche », « haut », « bas », « horizontal » et « vertical » s'entendent par rapport au repère orthogonal usuel des véhicules automobiles, représenté sur la figure 1, et possédant :
- un axe longitudinal X-X, horizontal et dirigé de l'arrière vers l'avant ;
- un axe transversal Y-Y, horizontal et dirigé de la droite vers la gauche, et
- un axe vertical Z-Z, dirigé du bas vers le haut.

Tel que représentée sur la figure 1, une traverse 2 de planche de bord de véhicule automobile comprend :
- une poutre 4 destinée à s'étendre entre les piliers A (représentés en traits mixtes) de la caisse d'un véhicule automobile, suivant un axe de traverse T sensiblement transversal ;
- des dispositifs 6 de fixation des extrémités axiales 8 de la poutre 4 sur les piliers A ; et
- une jambe de force 10 s'étendant sensiblement verticalement vers le bas à partir d'une région centrale de la poutre 4, et dont l'extrémité inférieure est destinée à être fixée sur un plancher de la caisse.

La poutre 4 comprend un premier tronçon axial 12 et un deuxième tronçon axial 14 distincts et s'étendant dans le prolongement l'un de l'autre suivant l'axe de traverse T. Chaque tronçon 12, 14 s'étend sur une partie de la longueur de la traverse 2, entre une extrémité axiale 8 de la poutre 4, et l'autre tronçon.

Le premier tronçon 12 possède une forme complexe, et est par exemple réalisé par moulage ou injection d'un métal ou alliage métallique, de préférence léger, tel que du magnésium ou de l'aluminium. Le premier tronçon 12 possède des nervures de rigidification, de sorte qu'il est à la fois résistant et léger.

Le premier tronçon 12 est situé du côté conducteur. Il est suffisamment rigide et il possède les interfaces de fixation nécessaires pour recevoir par exemple une colonne de direction. La jambe de force 10 est par exemple venue de matière avec le premier tronçon 12.

Le deuxième tronçon 14, situé du côté passager, est réalisé à partir d'un tube métallique, par exemple en acier ou en aluminium. Le deuxième tronçon 14 peut être obtenu à faible coût avec une résistance suffisante.

Les extrémités axiales 16, 18 adjacentes des tronçons 12, 14 sont fixées rigidement entre elles.

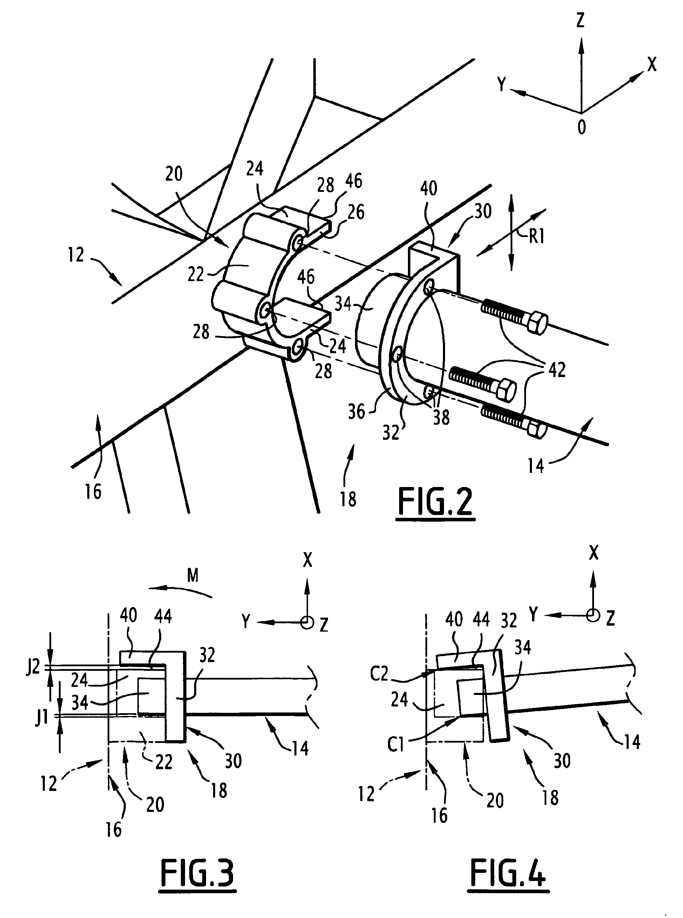

Pour ce faire, tel que représenté sur la figure 2, le tronçon 12 possède à son extrémité axiale 16 un embout 20 de fixation de l'extrémité 18 du tronçon 14.

L'embout 20 possède une forme de gouttière s'étendant suivant l'axe de traverse T et présentant une section sensiblement en « C » ouverte vers l'avant, définie par un fond 22 et deux branches 24 s'étendant vers l'avant à partir du fond 22.

L'embout 20 possède une surface frontale 26 d'extrémité axiale tournée vers le tronçon 14, et s'étendant sensiblement perpendiculairement à l'axe de traverse T, i.e. dans un plan longitudinal défini par les axes X-X et Z-Z.

L'embout 20 est muni de trous 28 filetés d'axes parallèles à l'axe T, par exemple au nombre de trois, débouchant sur la surface 26.

Le tronçon 14 possède une bride 30 de fixation sur l'embout 20.

La bride 30 possède un flasque 32 fixé sur le tronçon 14 à distance de l'extrémité libre de celui-ci, de sorte que le tronçon 14 possède une portion d'extrémité 34 s'étendant entre le flasque 32 et ladite extrémité libre.

Le flasque 32 s'étend dans un plan longitudinal radialement vers l'extérieur du tube à partir duquel le tronçon 14 est formé. Il possède une surface d'appui 36 sensiblement perpendiculaire à l'axe T, et destinée à venir en appui plan suivant l'axe T sur la surface frontale 26.

Le flasque 32 est muni d'orifices 38 destiné à venir en regard des trous 28.

La bride 30 possède un retour 40 s'étendant dans un plan sensiblement transversal, à partir d'une extrémité avant du flasque 32, en direction du tronçon 12.

Pour la fixation du tronçon 14 sur le tronçon 12, la portion d'extrémité 34 est engagée dans l'embout 20 jusqu'à ce que la surface d'appui 36 soit en appui suivant l'axe T (ou Y) sur la surface frontale 26. Ensuite, des vis 42 sont visées dans les trous 28 à travers les orifices 38, pour fixer le flasque 32 sur l'embout 20. Les tiges des vis 42 s'étendent suivant l'axe Y.

Le retour 40 passe devant les extrémités libres des branches 24 de l'embout 20.

Les orifices 38 possèdent une dimension suivant l'axe X-X et/ou l'axe Z-Z supérieure au diamètre des tiges des vis 42.

Ainsi, l'appui suivant l'axe Y-Y associé à la fixation par vis des tronçons 12 et 14 permet de régler la position relatives des tronçons 12 et 14 suivant les axes X-X et Z-Z, comme illustré par la croix R1, pour compenser des défauts de position en X ou en Z des tronçons 12 et 14, qui sont par ailleurs fixés sur les piliers A. Dès lors, le montage de la traverse 2 sur la caisse du véhicule est rendu plus facile, et peut dont être réalisé à coût faible.

L'embout 20 et la portion d'extrémité 34 sont dimensionnés de façon qu'il existe entre eux des jeux suivant les axes X-X et/ou Z-Z suffisant(s) pour permettre un déplacement relatif des tronçons 12, 14 permettant de compenser les défauts de position des tronçons 12 et 14.

De même, il existe un jeu suivant l'axe X-X suffisant entre le rebord 40 et les extrémités libres des branches 24, pour ne pas entraver le réglage de la position relative des tronçons 12 et 14 suivant l'axe X-X.

Les jeux J1 et J2 suivant l'axe X-X entre, d'une part, la portion d'extrémité 34 et le fond 22, et, d'autre part, le rebord 40 et les extrémités des branches 24 sont illustrés sur la figure 3.

En revenant à la figure 1, les dispositifs de fixation 6 sont destinés à venir en appui suivant l'axe X-X contre les piliers A, et munis d'orifices ou de trous filetés pour la fixation par vissage sur les piliers A, avec possibilité de réglage de la position des dispositifs 6 suivant les axes Y-Y et Z-Z par rapport aux piliers A, comme illustré par les croix R2.

Ceci permet de régler la position de chaque tronçon 12, 14 suivant l'axe Y-Y et/ou l'axe Z-Z par rapport au pilier A auquel il est fixé, ce qui facilite encore le pontage de la traverse 2 sur la caisse du véhicule automobile.

En outre, ceci évite les défauts de position des éléments fixés sur la traverse de planche de bord, et en particulier un habillage de planche de bord, ce qui évite l'apparition de jeux visibles par les utilisateurs et améliore la qualité perçue.

Par ailleurs, les moyens de liaison (embout 20 et bride 30) entre les tronçon 12 et 14 permettent d'améliorer la résistance de la traverse 2 en cas de choc (latéral ou frontal) subi par le véhicule automobile.

En effet, un choc fontal ou latéral provoque l'apparition d'un moment M (figure 2) positif autour de l'axe Z-Z s'appliquant sur la liaison entre les tronçons 12 et 14.

Par conséquent, comme illustré sur la figure 4, le tronçon 14 tend à pivoter par rapport au tronçon 12 de sorte que la portion d'extrémité 34 vienne en appui sur le fond 22, et le retour 40 vienne en appui sur une surface de blocage 44 définie par les extrémités libres des branches 24 de l'embout 20. Ces contacts C1, C2 s'additionnent aux vis 42 pour empêcher la rotation. La résistance de la traverse 2 en cas de choc est donc améliorée.

Ainsi, la traverse 2 conforme à l'invention est résistante et légère du fait de sa construction en deux tronçons 12 et 14, permettant de prévoir un tronçon de forme complexe, résistant et léger, réalisé en une première matière (magnésium ou aluminium), et un deuxième tronçon, de forme plus simple, réalisé de façon moins coûteuse, en une deuxième matière (aluminium ou acier), de résistance suffisante.

La traverse 2 est montée facilement du fait des réglages possible : réglage suivant l'axe X-X, et éventuellement aussi suivant l'axe Z-Z, entre les tronçons, et les réglages suivant les axes Y-Y et Z-Z des tronçons 12, 14 par rapport au piliers A.

La traverse 2 est en outre résistante, notamment en cas de choc frontal ou latéral subi par le véhicule automobile.

## Revendications

1. Traverse de planche de bord de véhicule automobile, du type destinée à s'étendre axialement sensiblement suivant un axe transversal (Y-Y) du véhicule automobile, et comprenant un premier tronçon axial (12) et un deuxième tronçon axial (14) distincts s'étendant dans le prolongement l'un de l'autre,
**caractérisé en ce que** le premier tronçon (12) et le deuxième tronçon (14) possèdent des extrémités adjacentes (16, 18) destinées à être en appui plan l'une contre l'autre sensiblement suivant l'axe transversal (Y-Y), et **en ce que** la traverse comprend des moyens de fixation desdites extrémités adjacentes (16, 18) permettant un réglage de la position relative desdites extrémités adjacentes suivant au moins un axe de réglage (X-X, Z-Z) sensiblement perpendiculaire à l'axe transversal (Y-Y).

2. Traverse de planche de bord selon la revendication 1, **caractérisée en ce que** les moyens de fixation possèdent au moins une vis de fixation des extrémités adjacentes (16, 18) du premier tronçon (12) et du deuxième tronçon (14) entre elles, d'axe destiné à être sensiblement parallèle à l'axe transversal (Y-Y).

3. Traverse de planche de bord selon la revendication 2, **caractérisée en ce qu'**une des extrémités (16, 18) du premier tronçon (12) et du deuxième tronçon (14) possède des trous filetés de réception des vis (42), et **en ce que** l'autre extrémité possède des orifices (38) de passage des vis (42).

4. Traverse de planche de bord selon la revendication 3, **caractérisée en ce que** les orifices (38) sont dimensionnés pour permettre un réglage de la position relative des tronçons (12, 14) suivant un axe longitudinal (X-X) du véhicule au moment du vissage.

5. Traverse de planche de bord selon la revendication 3 ou 4, **caractérisée en ce que** les orifices (38) sont dimensionnés pour permettre un réglage de la position relative des tronçons (12, 14) suivant un axe vertical (Z-Z) du véhicule au moment du vissage.

6. Traverse de planche de bord selon l'une quelconque des revendications précédentes, **caractérisé en ce que** les extrémités adjacentes (16, 18) possèdent des éléments (20, 30) emboîtables en appui plan suivant l'axe transversal (Y-Y) avec un jeu suivant le ou chaque axe de réglage (X-X, Z-Z) pour permettre le ou les réglages, les éléments emboîtables (20, 30) possédant des régions destinées à venir en appui en cas de rotation d'un des premiers et deuxième tronçons (12, 14) par rapport à l'autre, en cas de choc subi par le véhicule automobile, pour s'opposer à ladite rotation.

7. Traverse de planche de bord selon l'une quelconque des revendications précédentes, **caractérisée en ce qu'**un des premier et deuxième tronçons (12, 14) possède un embout (20) définissant un espace de réception d'une portion d'extrémité (34) de l'autre tronçon (12, 14) avec un jeu suivant le ou chaque axe de réglage, la portion d'extrémité (34) étant destinée à venir en appui sur une paroi intérieure de l'embout en cas de rotation relative des premier et deuxième tronçons (12, 14).

8. Traverse de planche de bord selon la revendication 6 ou 7, **caractérisée en ce qu'**un des premier et deuxième tronçons (12, 14) possède un flasque (32) d'appui sur une surface d'appui (26) de l'autre tronçon suivant l'axe transversal (Y-Y), le flasque (32) possédant un retour (40) de blocage en rotation destiné à présenter un jeu avec une surface de blocage (44) de l'autre tronçon pour permettre le réglage suivant le ou chaque axe de réglage, et à venir en appui sur ladite surface de blocage de l'autre tronçon pour s'opposer à une rotation relative des premier et deuxième tronçons (12, 14).

9. Traverse de planche de bord selon l'une quelconque des revendications précédentes, **caractérisée en ce qu'**elle comprend à ses extrémités axiales (8) des dispositifs (4) de fixation sur les piliers A d'une caisse de véhicule automobile, possédant des moyens de liaison aux piliers A permettant un réglage de la position de chacun des premier et deuxième tronçons (12, 14) par rapport au pilier A associé suivant l'axe transversal (Y-Y) et/ou l'axe vertical (Z-Z) du véhicule automobile.

10. Traverse de planche de bord selon l'une quelconque des revendications précédentes, **caractérisée en ce que** l'un des premier et deuxième tronçons (12, 14) est réalisé à partir d'une pièce métallique moulée ou injectée.

11. Traverse de planche de bord selon la revendication 10, **caractérisée en ce que** l'autre parmi les premier et deuxième tronçons (12, 14) est réalisé à partir d'un tube métallique.

12. Traverse de planche de bord selon l'une quelconque des revendications précédentes, **caractérisée en ce que** les premier et deuxième tronçons (12, 14) sont réalisés dans des métaux différents.

13. Traverse de planche de bord selon la revendication 12, **caractérisée en ce que** l'un des premier et deuxième tronçons (12, 14) est réalisé en magnésium, en alliage de magnésium, en aluminium ou en alliage d'aluminium, et l'autre tronçon est réalisé en aluminium en alliage d'aluminium ou en acier.

14. Véhicule automobile selon l'une quelconque des revendications précédentes, **caractérisé en ce qu'**il comprend une traverse de planche de bord selon l'une quelconque des revendications précédentes.

## Claims

1. A cross member for the dashboard of a car of the type intended to extend axially substantially along a transverse axis (Y-Y) of the car, and comprising a first axial segment (12) and a second axial segment (14), distinct from one another and extending along the extension of one another,
**characterised in that** the first segment (12) and the second segment (14) have adjacent ends (16, 18) intended to rest against one another substantially along the transverse axis (Y-Y), and **in that** the cross member comprises means for fixing said adjacent ends (16, 18) allowing adjustment of the relative position of said adjacent ends along at least one adjustment axis (X-X, Z-Z) substantially perpendicular to the transverse axis (Y-Y).

2. The dashboard cross member according to Claim 1, **characterised in that** the fixing means have at least one fixing screw for the adjacent ends (16, 18) of the first segment (12) and of the second segment (14) between them, with an axis intended to be substantially parallel to the transverse axis (Y-Y).

3. The dashboard cross member according to Claim 2, **characterised in that** one of the ends (16, 18) of the first segment (12) and of the second segment (14) has threaded holes for receiving screws (42), and **in that** the other end has orifices (38) through which the screws (42) pass.

4. The dashboard cross member according to Claim 3, **characterised in that** the orifices (38) are of dimensions that allow adjustment of the relative position of the segments (12, 14) along a longitudinal axis (X-X) of the vehicle at the time of screwing.

5. The dashboard cross member according to Claim 3 or 4, **characterised in that** the orifices (38) are of dimensions that allow adjustment of the relative position of the segments (12, 14) along a vertical axis (Z-Z) of the vehicle at the time of screwing.

6. The dashboard cross member according to any of the preceding claims, **characterised in that** the adjacent ends (16, 18) have elements (20, 30) that can be fitted together by being brought to rest flat along the transverse axis (Y-Y) with play along the or each axis of adjustment (X-X, Z-Z) so as to enable adjustment or adjustments, the elements that can be fitted together (20, 30) having regions than can be supported in the event of rotation by one of the first and second segments (12, 14) in relation to the other, in the event of the car being subjected to impact, so as to oppose said rotation.

7. The dashboard cross member according to any of the preceding claims, **characterised in that** one of the first and second segments (12, 14) has a tip (20) defining a space for receiving an end portion (34) of the other segment (12, 14) with play along the or each adjustment axis, the end portion (34) being intended to come to rest on an inner partition wall of the tip in the event of relative rotation of the first and second segments (12, 14).

8. The dashboard cross member according to Claim 6 or 7, **characterised in that** one of the first and second segments (12, 14) has a supporting flange (32) on one support surface (26) of the other segment along the transverse axis (Y-Y), the flange (32) having a rotating blockage return (40) intended to provide play with a blocking surface (44) of the other segment so as to enable adjustment along the or each axis of adjustment and to come to rest against said blocking surface of the other segment in order to oppose relative rotation of the first and second segments (12, 14).

9. The dashboard cross member according to any of the preceding claims, **characterised in that** it comprises on its axial ends (8) devices (4) for fixing onto the pillars A of a car shell, having means for joining to the pillars A which enable adjustment of the position of each of the first and second segments (12, 14) in relation to the associated pillar A along the transverse axis (Y-Y) and/or the vertical axis (Z-Z) of the car.

10. The dashboard cross member according to any of the preceding claims, **characterised in that** one of the first and second segments (12, 14) is produced from a moulded or injected metallic part.

11. The dashboard cross member according to Claim 10, **characterised in that** the other of the first and second segments (12, 14) is produced from a metallic tube.

12. The dashboard cross member according to any of the preceding claims, **characterised in that** the first and second segments (12, 14) are produced from different metals.

13. The dashboard cross member according to Claim 12, **characterised in that** one of the first and second segments (12, 14) is produced from magnesium, magnesium alloy, aluminium or aluminium alloy, and the other segment is produced from aluminium, aluminium alloy or steel.

14. A car according to any of the preceding claims, **characterised in that** it comprises a dashboard cross member according to any of the preceding claims.

## Patentansprüche

1. Querstrebe für Kraftfahrzeug-Armaturenbrett, des Typs, der dazu vorgesehen ist, im Wesentlichen axial längs einer transversalen Achse (Y-Y) des Kraftfahrzeugs zu verlaufen, und der ein erstes axiales Teilstück (12) und ein zweites axiales Teilstück (14), die voneinander verschieden sind und sich in gegenseitiger Verlängerung erstrecken, umfasst,
**dadurch gekennzeichnet, dass** das erste Teilstück (12) und das zweite Teilstück (14) einander benachbarte Enden (16, 18) besitzen, die dazu bestimmt sind, sich im Wesentlichen längs der transversalen Achse (Y-Y) eben aneinander abzustützen, und dass die Querstrebe Mittel für die Befestigung der benachbarten Enden (16, 18) umfasst, die eine Einstellung der relativen Positionen dieser benachbarten Enden wenigstens längs einer zu der transversalen Achse (Y-Y) im Wesentlichen senkrechten Einstellachse (X-X, Z-Z) ermöglichen.

2. Armaturenbrett-Querstrebe nach Anspruch 1, **dadurch gekennzeichnet, dass** die Befestigungsmittel wenigstens eine Schraube besitzen, um die benachbarten Enden (16, 18) des ersten Teilstücks (12) und des zweiten Teilstücks (14) längs einer Achse, die zu der transversalen Achse (Y-Y) im Wesentlichen parallel sein soll, aneinander zu befestigen.

3. Armaturenbrett-Querstrebe nach Anspruch 2, **dadurch gekennzeichnet, dass** eines der Enden (16, 18) des ersten Teilstücks (12) bzw. des zweiten Teilstücks (14) Gewindebohrungen für die Aufnahme der Schrauben (42) besitzt und dass das andere Ende Öffnungen (38) für den Durchgang der Schrauben (42) besitzt.

4. Armaturenbrett-Querstrebe nach Anspruch 3, **dadurch gekennzeichnet, dass** die Öffnungen (38) so bemessen sind, dass eine Einstellung der relativen Position der Teilstücke (12, 14) längs einer longitudinalen Achse (X-X) des Fahrzeugs zum Zeitpunkt des Verschraubens möglich ist.

5. Armaturenbrett-Querstrebe nach Anspruch 3 oder 4, **dadurch gekennzeichnet, dass** die Öffnungen (38) so bemessen sind, dass eine Einstellung der relativen Position der Teilstücke (12, 14) längs einer vertikalen Achse (Z-Z) des Fahrzeugs zum Zeitpunkt des Verschraubens möglich ist.

6. Armaturenbrett-Querstrebe nach einem der vorhergehenden Ansprüche, **dadurch gekennzeichnet, dass** die benachbarten Enden (16, 18) Elemente (20, 30) besitzen, die ineinander einsetzbar sind und dabei längs der transversalen Achse (Y-Y) eben aneinander stoßen und längs der oder jeder Einstellachse (X-X, Z-Z) ein Spiel haben, um die Einstellung(en) zu ermöglichen, wobei die ineinander einsetzbaren Elemente (20, 30) Bereiche besitzen, die dazu bestimmt sind, sich bei einer Drehung eines der ersten und zweiten Teilstücke (12, 14) in Bezug auf das Andere im Fall eines Stoßes, den das Kraftfahrzeug erfährt, aneinander abstützen, um der Drehung entgegenzuwirken.

7. Armaturenbrett-Querstrebe nach einem der vorhergehenden Ansprüche, **dadurch gekennzeichnet, dass** eines der ersten und zweiten Teilstücke (12, 14) einen Ansatz (20) besitzt, der einen Aufnahmeraum für einen Endabschnitt (34) des anderen Teilstücks (12, 14) mit einem Spiel längs der oder jeder Einstellachse definiert, wobei der Endabschnitt (34) dazu bestimmt ist, sich an einer Innenwand des Ansatzes im Fall einer relativen Drehung der ersten und zweiten Teilstücke (12, 14) abzustützen.

8. Armaturenbrett-Querstrebe nach Anspruch 6 oder 7, **dadurch gekennzeichnet, dass** eines der ersten und zweiten Teilstücke (12, 14) einen Flansch (32) für die Abstützung an einer Abstützoberfläche (26) des anderen Teilstücks längs der transversalen Achse (Y-Y) besitzt, wobei der Flansch (32) einen Rücksprung (40) für eine Blockierung der Drehung besitzt, der mit einer Blockieroberfläche (44) des anderen Teilstücks ein Spiel aufweisen soll, um die Einstellung längs der oder jeder Einstellachse zu ermöglichen, und sich an der Blockieroberfläche des anderen Teilstücks abstützen soll, um einer relativen Drehung der ersten und zweiten Teilstücke (12, 14) entgegenzuwirken.

9. Armaturenbrett-Querstrebe nach einem der vorhergehenden Ansprüche, **dadurch gekennzeichnet, dass** sie an ihren axialen Enden (8) Vorrichtungen (4) für die Befestigung an den A-Säulen einer Kraftfahrzeugkarosserie umfasst, die Mittel für die Verbindung mit den A-Säulen besitzen, die eine Einstellung der Position jedes der ersten und zweiten Teilstücke (12, 14) in Bezug auf die zugeordnete A-Säule längs der transversalen Achse (Y-Y) und/oder der vertikalen Achse (Z-Z) des Kraftfahrzeugs ermöglichen.

10. Armaturenbrett-Querstrebe nach einem der vorhergehenden Ansprüche, **dadurch gekennzeichnet, dass** eines der ersten und zweiten Teilstücke (12, 14) aus einem Guss- oder Spritzguss-Metallteil hergestellt ist.

11. Armaturenbrett-Querstrebe nach Anspruch 10, **dadurch gekennzeichnet, dass** das Andere der ersten und zweiten Teilstücke (12, 14) aus einem Metallrohr hergestellt ist.

12. Armaturenbrett-Querstrebe nach einem der vorhergehenden Ansprüche, **dadurch gekennzeichnet, dass** das erste und das zweite Teilstück (12, 14) aus verschiedenen Metallen hergestellt sind.

13. Armaturenbrett-Querstrebe nach Anspruch 12, **dadurch gekennzeichnet, dass** eines der ersten und zweiten Teilstücke (12, 14) aus Magnesium, einer Magnesiumlegierung, aus Aluminium oder einer Aluminiumlegierung hergestellt ist und dass das andere Teilstück aus Aluminium, einer Aluminiumlegierung oder aus Stahl hergestellt ist.

14. Kraftfahrzeug nach einem der vorhergehenden Ansprüche, **dadurch gekennzeichnet, dass** es eine Armaturenbrett-Querstrebe nach einem der vorhergehenden Ansprüche enthält.
